# FASCICULE DE BREVET EUROPEEN

(11) **EP 1 216 179 B1**
(45) Date de publication et mention de la délivrance du brevet: **23.04.2003**
(21) Numéro de dépôt: 00966236.2
(22) Date de dépôt: 29.09.2000
(51) Int. Cl.: B61D 17/20

(54) **PROTECTION POUR LE PASSAGE D'INTERCIRCULATION ENTRE DEUX VOITURES CONSECUTIVES D'UN MEME VEHICULE TERRESTRE ARTICULE**
SCHUTZ FÜR DIE ÜBERGANGSEINRICHTUNG ZWISCHEN ZWEI AUFEINANDER FOLGENDEN WAGEN EINES GELENK-LANDFAHRZEUGES
PROTECTION FOR INTERCAR LINKAGE PASSAGE BETWEEN TWO CONSECUTIVE CARS OF A COMMON ARTICULATED LAND VEHICLE

(30) Priorité: 29.09.1999 FR 9912333
(43) Date de publication de la demande: 26.06.2002
(73) Titulaire: LOHR INDUSTRIE, 67980 Hangenbieten (FR)
(72) Inventeur: ANDRE, Jean-Luc, F-67210 Obernai (FR)
(74) Mandataire: Metz, Paul
(86) Numéro de dépôt international: FR0002705
(87) Numéro de publication internationale: WO01023236

(56) Documents cités:
- EP-A- 0 177 424
- FR-A- 2 020 662
- US-A- 4 903 612

## Description

L'invention se rapporte à une structure bilatérale d'habillage pour le passage d'intercirculation recouvert d'un soufflet entre deux voitures successives d'un même véhicule de transport de personnes.

De telles structures sont connues du document FR-A-2.020.662 par exemple.

Les protections de passages d'intercirculation entre deux voitures successives d'un même véhicule se limitent actuellement à des structures du type à soufflet portées par des supports longitudinaux dont les extrémités sont fixées chacune sur les ouvertures de sortie des voitures.

Ces structures de protection assurent simultanément l'étanchéité du volume de raccordement entre les deux voitures successives et l'adaptation à sa déformation pendant les virages et les diverses modifications d'orientation liées au roulage, dont les changements de direction, de pente et d'inclinaison.

Le soufflet est un organe provenant d'une structure pliée qui travaille en ouverture et en fermeture de dièdres élémentaires. Il constitue une protection suffisante pour l'usage courant auquel il est destiné, mais présente une rigidité et une résistance mécanique non adaptées à des agressions mécaniques, telles que des coupures ou des chocs.

De plus, la structure en accordéon peu esthétique du soufflet est constituée d'une suite de plis dans lesquels peuvent se concentrer des dépôts de matières polluantes liquides et solides constituant une gêne technique pour le bon fonctionnement ou un aspect malpropre engendrant une impression négative sur les passagers.

Dans le cas d'un module intermédiaire porté par des roues, ces structures à soufflet n'assurent pas cependant la protection et le rôle de garde boue pour les roues dans la limitation des projections liées à la rotation de la roue sur sol sale ou simplement mouillé ainsi qu'un rôle supplémentaire de continuité d'esthétique de carrosserie.

L'invention a pour but de remédier simultanément à ces divers inconvénients en proposant une structure d'habillage assurant la protection du soufflet et des roues sous la forme d'une succession latérale de panneaux de carrosserie de chaque côté.

Plus particulièrement, elle vise à protéger parfaitement et complètement le soufflet et les roues sur chaque face latérale du véhicule sous la forme à chaque fois d'une obturation totale à l'aide d'un panneau central rigide et mobile de recouvrement s'insérant entre les deux extrémités des surfaces de carrosserie assurant la couverture de flanc des deux voitures adjacentes.

Ce but est atteint au moyen des caractéristiques de la Revendication 1.

Selon l'invention, des moyens assurent le dégagement temporaire de chaque panneau central pour permettre d'absorber la contraction locale de longueur du côté intérieur au virage par rapprochement des extrémités des carrosseries des voitures voisines tout en gardant la continuité esthétique d'ensemble.

A cet effet, l'invention se rapporte à une protection bilatérale pour un passage d'intercirculation équipé d'un soufflet de protection pour un module intermédiaire auto-porté assurant la liaison entre deux voitures successives d'un même véhicule articulé de transport notamment de personnes, caractérisée en ce qu'au droit du passage d'intercirculation en prolongation de chacune des surfaces latérales de carrosserie de chaque voiture articulée chacune sur le module intermédiaire par une articulation de pivotement et en recouvrement du soufflet de protection du passage d'intercirculation est monté mobile en mouvements transversaux d'éloignement et de rapprochement par rapport au module intermédiaire un panneau central entre d'une part une position de ligne droite dans laquelle il se trouve en continuation coplanaire avec les extrémités de la carrosserie latérale de chacune des voitures aboutissant au module intermédiaire, et d'autre part une position intérieure au virage, vers et jusque dans laquelle le panneau central mobile s'est déplacé automatiquement et transversalement sous l'effet d'une force motrice automatique et de laquelle il est ramené automatiquement au retour en ligne droite par une force de rappel.

Plus particulièrement, le panneau central rigide et mobile qui habille chaque face latérale du passage d'intercirculation sur la majeure partie de sa longueur constitue une protection efficace contre toutes les agressions venant de l'extérieur.

Sa rigidité offre une résistance mécanique suffisante pour protéger le volume intérieur contre les impacts et les agressions diverses.

Sa forme plane et lisse, légèrement incurvée en partie supérieure ne comporte à aucun endroit une conformation constituant un réceptacle présentant l'inconvénient de retenir les matières ou les liquides.

Grâce à une poussée d'éloignement, le panneau central situé à l'intérieur du virage est décalé progressivement transversalement vers l'extérieur du module intermédiaire lors du virage pour laisser un espace libre dans lequel peuvent se déplacer les extrémités se rapprochant des voitures adjacentes. Le panneau central situé à l'intérieur du virage est rappelé ensuite vers l'intérieur du module intermédiaire par une force élastique.

La solution inventive selon la présente invention présente de multiples avantages car elle :
. protège le soufflet des agressions extérieures tant météorologiques et climatiques que résultant de projections ou liées au vandalisme,
. améliore l'aérodynamisme du véhicule,
. peut servir de surface publicitaire,
. assure une continuité esthétique de la carrosserie tout en protégeant les panneaux des dommages,
. réalise une protection technique des roues en même temps qu'un cache esthétique pour celles-ci,
. permet d'assurer les principales fonctions en ne renforçant les structures que localement, ce qui évite un renchérissement sensible du véhicule.

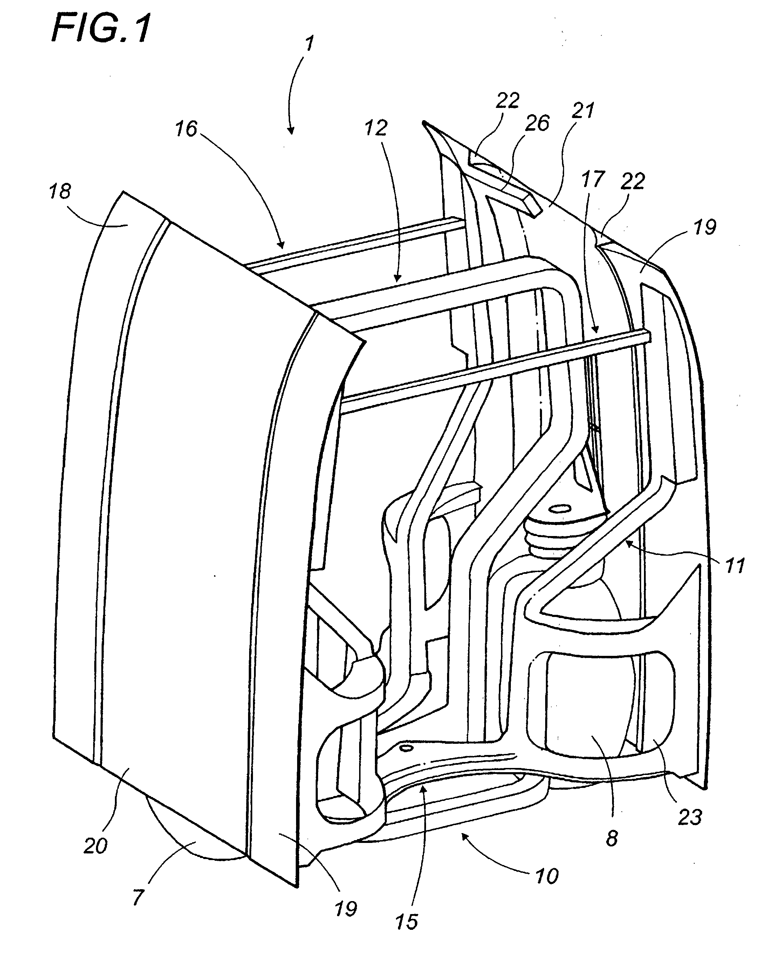

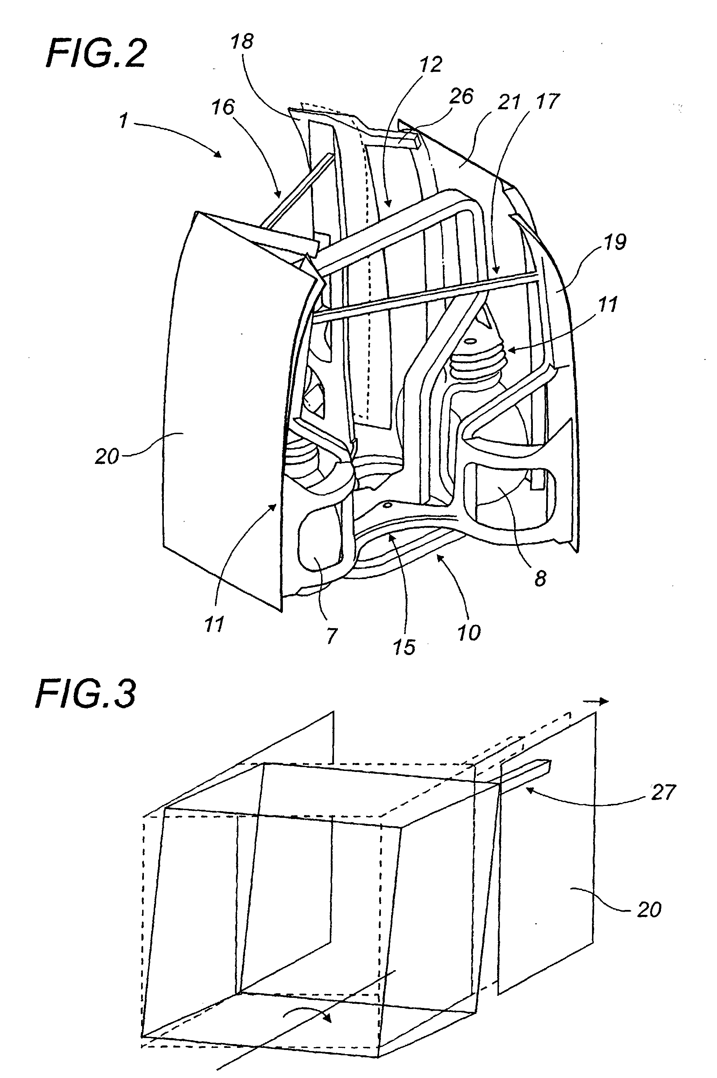

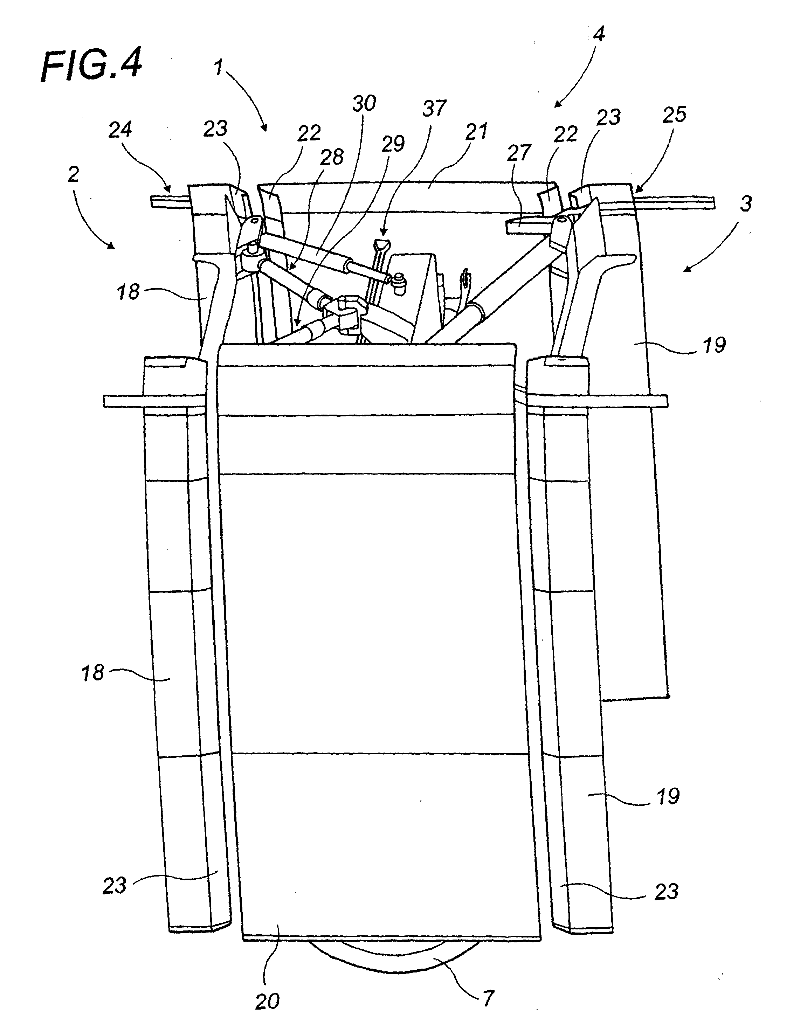

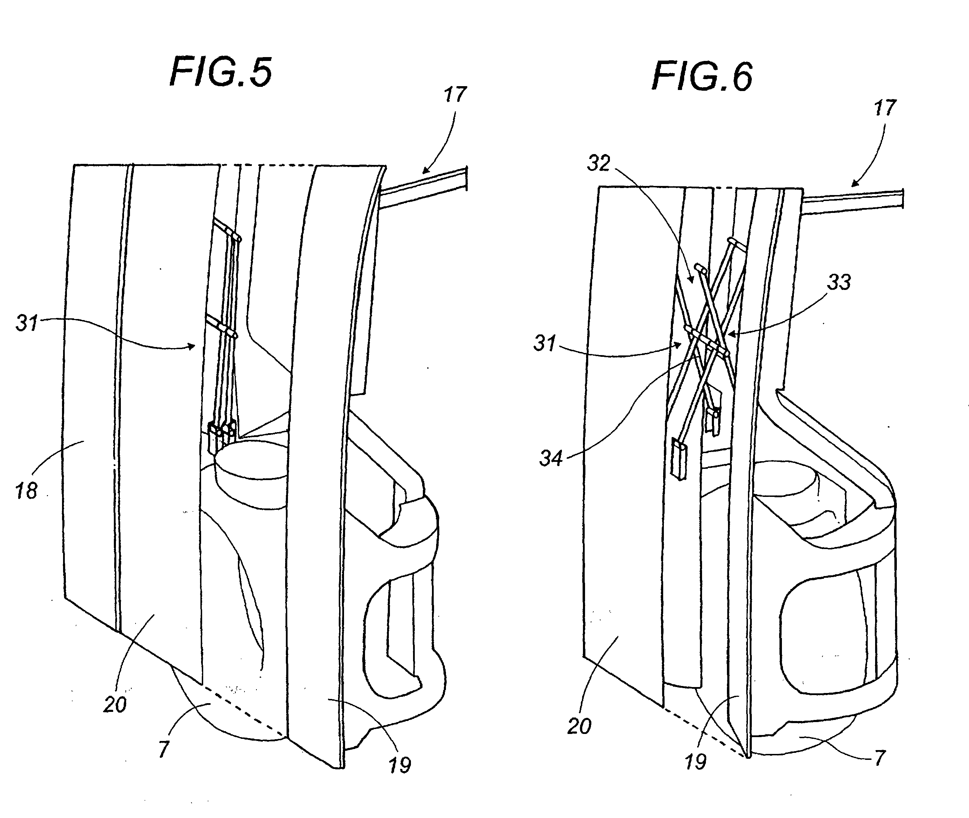

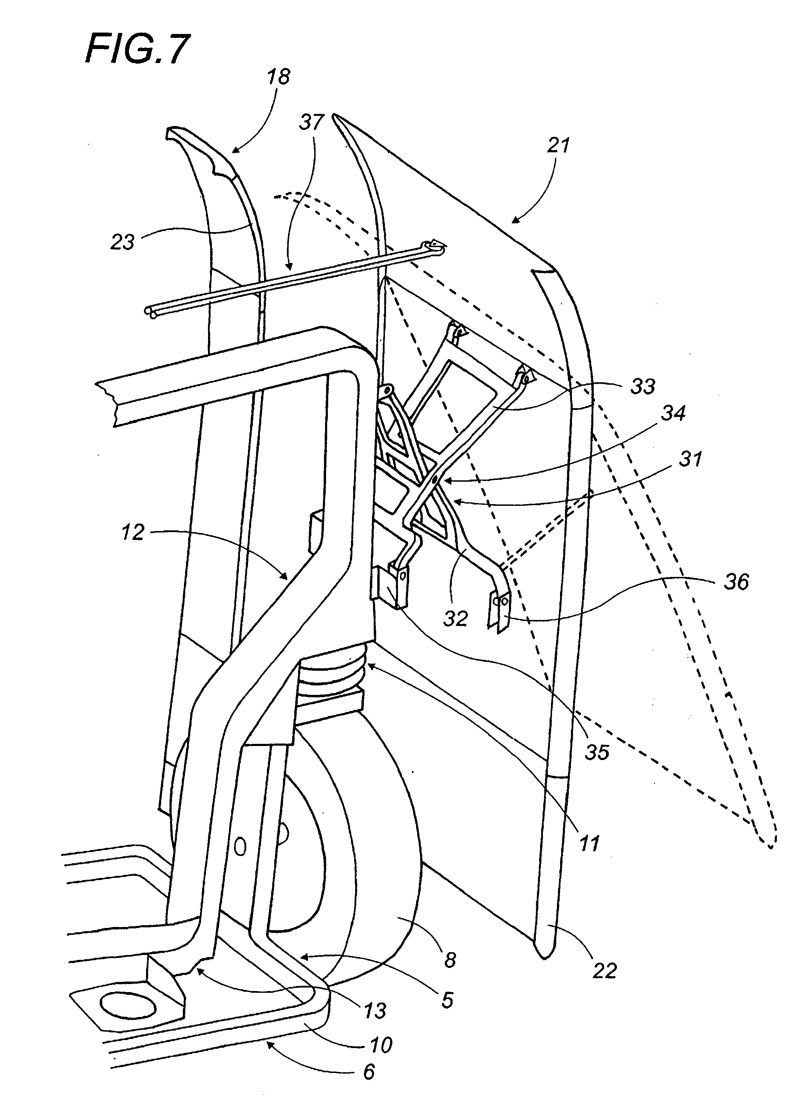

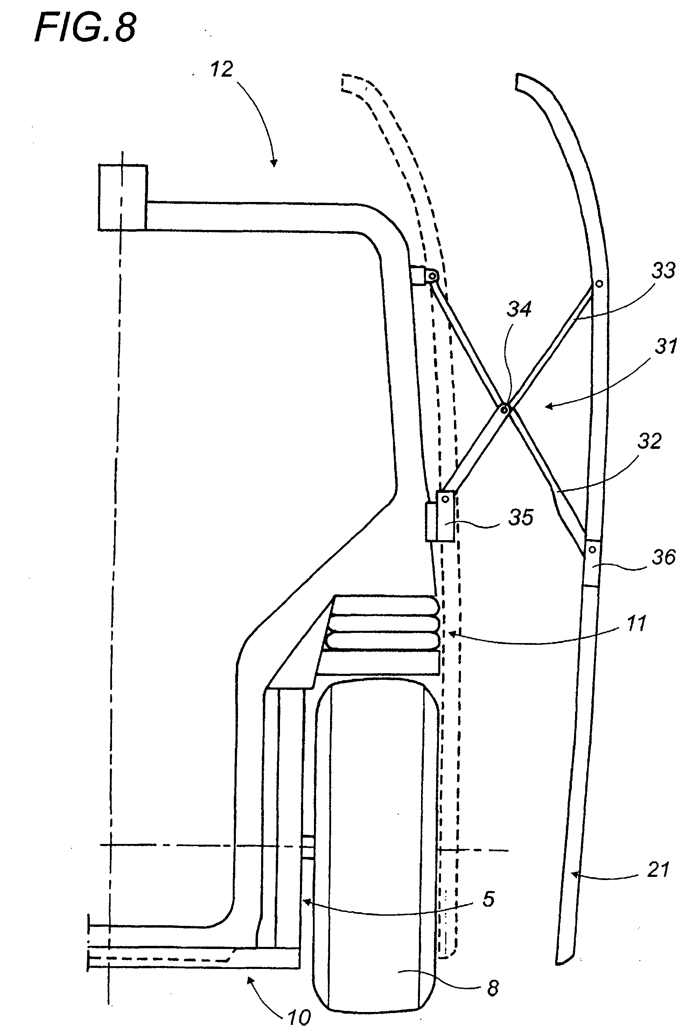

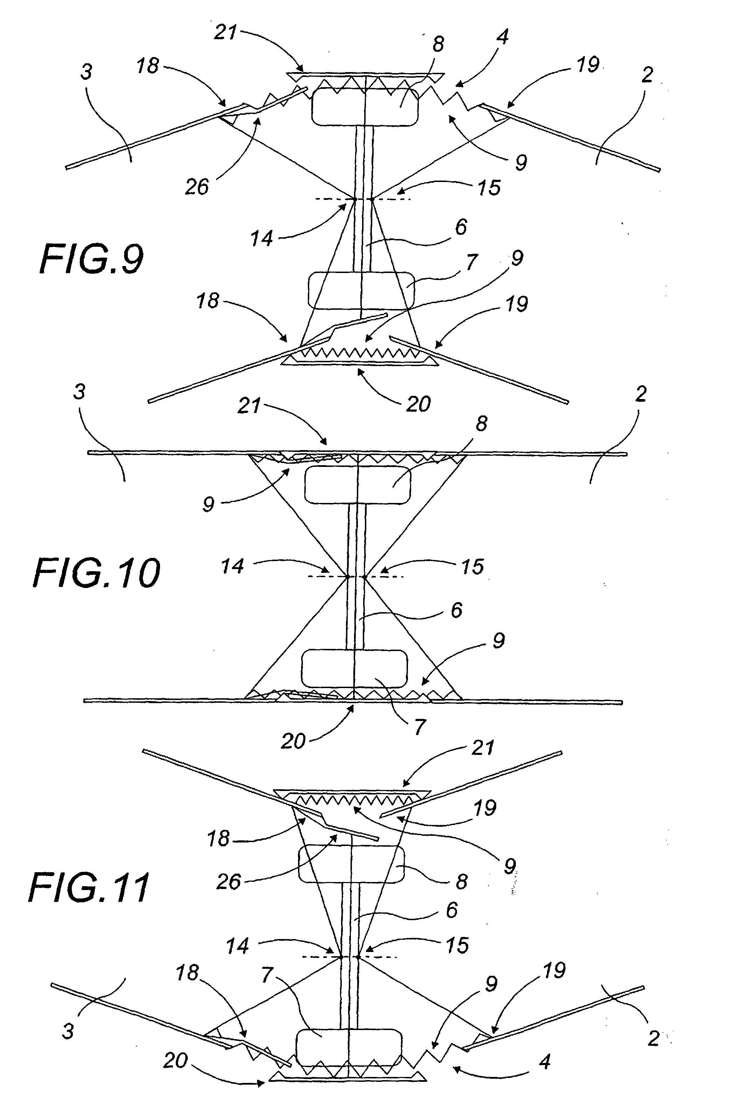

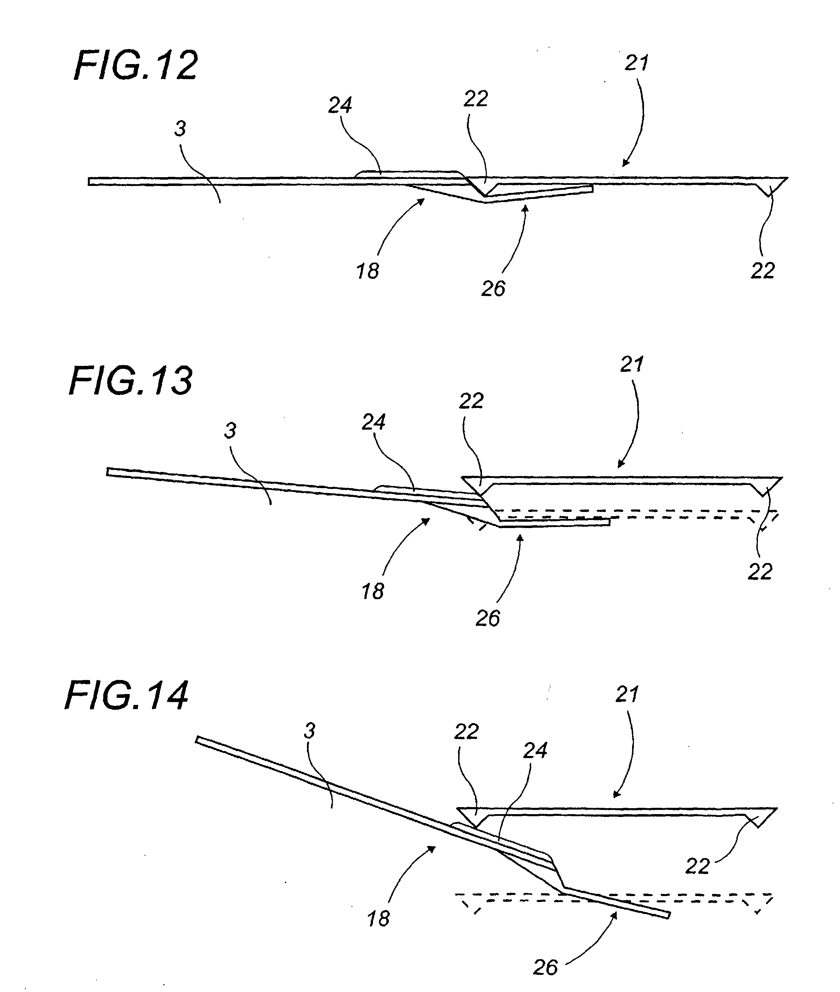

D'autres caractéristiques et avantages de l'invention apparaîtront dans la description qui suit, donnée à titre d'exemple non limitatif en référence au dessin dans lequel :
. la figure 1 est une vue schématique en perspective du passage d'intercirculation en configuration de ligne droite, soufflet non visible ;
. la figure 2 est une vue schématique en perspective du passage d'intercirculation sans soufflet en configuration de virage à gauche et d'inclinaison à gauche d'une des voitures ;
. la figure 3 est un schéma géométrique en perspective montrant le travail de dégagement du panneau central par la corne d'écartement en cas de roulis ;
. la figure 4 est une vue d'ensemble en perspective d'un module intermédiaire équipé de l'habillage bilatéral selon l'invention ;
. la figure 5 est une vue schématique en perspective d'un des panneaux centraux et de son mécanisme de manoeuvre, ledit panneau central étant représenté transparent sur une partie de sa longueur et en position de ligne droite, soufflet non visible ;
. la figure 6 est une vue schématique de détail en perspective montrant le panneau central en position d'éloignement laissant apparaître son mécanisme de manoeuvre, soufflet non visible ;
. la figure 7 est une vue en perspective de l'intérieur du module intermédiaire montrant un panneau central maintenu droit par sa structure de support et montrant en traits brisés sa position inclinée de dégagement ;
. la figure 8 est une vue de profil montrant une demi partie du module intermédiaire avec le panneau central en position d'éloignement et en position rabattue ;
. les figures 9 à 11 sont des vues schématiques du passage d'intercirculation et des extrémités des voitures adjacentes dans trois configurations caractéristiques respectivement de virage à droite, de ligne droite et de virage à gauche, avec représentation du soufflet ;
. les figures 12 à 14 sont des vues schématiques illustrant les positions relatives d'un panneau central par rapport à la carrosserie d'une voiture adjacente en configuration de ligne droite puis de début de virage et de virage maximal.

La structure bilatérale d'habillage du passage d'intercirculation selon l'invention est plus particulièrement mais non exclusivement prévue pour habiller la protection, assurée par exemple mais non exclusivement par un soufflet d'un passage d'intercirculation 1 entre deux voitures successives 2 et 3, l'une avant et l'autre arrière, d'une même rame routière ou ferroviaire par exemple mais non exclusivement de transport de personnes.

Cette structure bilatérale d'habillage est montée sur un module intermédiaire 4 à cadre-châssis 5 formant un essieu 6 de profil en U reliant deux roues 7 et 8.

Dans la variante représentée, la structure bilatérale selon l'invention couvre un soufflet 9 assurant une protection de base.

Ce cadre-châssis 5 présente une base inférieure 10 en cadre et supporte par l'intermédiaire de deux suspensions, par exemple à soufflets pneumatiques tels que 11, un cadre central vertical 12 servant d'ossature et de support aux éléments de structure et d'habillage du module intermédiaire 4 et délimitant la section du passage d'intercirculation. Ce cadre central 12 assure également la fonction d'ossature porteuse de la carrosserie du module intermédiaire 4.

Tel que représenté, il affecte la forme générale de profil d'un champignon et occupe une position centrale dans le module intermédiaire 1.

Chaque montant du cadre central 12 se divise en deux branches espacées formant une base d'appui 13 conformée en cadre horizontal, elle même montée articulée sur la base inférieure 9 du châssis. Cette base d'appui 13 porte deux articulations de pivotement 14 et 15 proches l'une de l'autre et situées de part et d'autre du plan transversal médian du module intermédiaire le long duquel se développe le cadre central 12.

Ces articulations 14 et 15 sont les articulations de pivotement des voitures adjacentes et successives 2 et 3 par l'intermédiaire desquelles chacune des extrémités desdites voitures est portée à pivotement par le module intermédiaire 4 pour réaliser la cassure angulaire de la rame nécessaire à la prise des virages.

Plus particulièrement, ces articulations de pivotement 14 et 15 sont proches l'une de l'autre et reliées aux cadres d'extrémité 16 et 17 des structures de carrosserie des voitures adjacentes 2 et 3 se terminant de chaque côté par des extrémités 18 et 19 des panneaux de carrosserie formant l'habillage de flanc de chacune des voitures 2 et 3.

Un panneau central mobile de recouvrement 20 situé d'un côté et 21 de l'autre côté assure l'habillage principal latéral de chaque face latérale du passage d'intercirculation 1. Pour assurer la fermeture totale, chaque panneau central mobile de recouvrement 20 ou 21 vient s'insérer dans l'espace existant entre chaque extrémité en regard des carrosseries des voitures adjacentes 2 et 3. Les bords longitudinaux verticaux des panneaux et des extrémités de carrosserie sont pourvus ou conformés à cet effet en retours obliques tels que 22 pour les panneaux et 23 pour les extrémités de carrosserie (figure 4). Ces retours forment des ailes convenablement orientées vers l'intérieur du module intermédiaire pour des raisons techniques de rigidification et d'étanchéité mais aussi pour assurer une continuité d'aspect en configuration de ligne droite rendant le faible jeu de juxtaposition légèrement visible.

Ces retours ou bordures d'extrémité 22 de panneau et 23 de carrosserie se matérialisent et sont représentés sur certaines figures selon des formes différentes. En effet, pour des raisons techniques on préférera tel ou tel mode de réalisation tout en restant dans le domaine des équivalents.

Les panneaux centraux de recouvrement 20 ou 21 sont mobiles transversalement au module intermédiaire 4 et vers l'extérieur de celui-ci sous l'effet du rapprochement des extrémités 18 et 19 des voitures adjacentes 2 et 3 du côté intérieur au virage. Comme on le verra ci-après, ce mouvement est automatique car provoqué par le rapprochement des extrémités des voitures 2 et 3 du côté intérieur au virage.

Lors du même virage et dans le même temps, les bords opposés des extrémités 18 et 19 en regard des voitures 2 et 3 s'échappent des bords du panneau central de recouvrement opposé par exemple 21 sans nécessiter un quelconque mouvement transversal de dégagement de celui-ci (figure 9).

A cet effet, les retours 22 des bords longitudinaux de chaque panneau central de recouvrement 20 ou 21 et les retours 23 des bords d'extrémité de carrosserie sont adaptés en largeur et en inclinaison en fonction des trajectoires de dégagement pour éviter toute interférence préjudiciable entre les carrosseries d'habillage des voitures et du module.

Les parties supérieures des extrémités de carrosserie des voitures adjacentes successives 2 et 3 sont pourvues de renforts locaux, par exemple, sous la forme de bandes longitudinales 24 et 25 par rapport aux voitures et légèrement en relief, constituant des pistes sur chacune desquelles appuie la partie supérieure d'un bord vertical 22 d'un panneau central de recouvrement 20 ou 21 du côté intérieur au virage (figure 4). Ces pistes 24 et 25 constituent de véritables rampes obliques de poussée permettant au panneau central de recouvrement 20 ou 21 situé du côté du virage de se déplacer automatiquement et transversalement vers l'intérieur du virage.

En vue d'éviter les interférences dues au roulis, notamment dans les courbes, la partie supérieure au moins des extrémités d'une voiture, notamment la voiture arrière dans le cas décrit ici pris comme exemple de réalisation, comporte chacune une corne d'écartement 26 et 27. Il s'agit d'une tige longitudinale solidarisée à la partie supérieure des extrémités d'une voiture, par exemple la voiture arrière. L'extrémité de cette tige est décalée latéralement vers l'intérieur du module intermédiaire tout en restant parallèle au panneau central adjacent de manière à entrer en contact de poussée avec le retour du bord vertical adjacent du panneau central de recouvrement lors des mouvements de roulis dans les courbes. Cette poussée assure le dégagement nécessaire pour éloigner les deux extrémités en regard de la voiture et du panneau central de recouvrement en cas de roulis (figure 3).

Cet arrangement est prévu sur une seule des extrémités d'une seule des voitures adjacentes au module intermédiaire pour la réalisation décrite et représentée prise comme exemple de réalisation, car le cadre central 12 est articulé à la voiture avant par deux bielles obliques supérieures 28 et 29 qui concourent à assurer en tangage et en roulis un mouvement d'ensemble aux structures voisines que sont les extrémités respectivement de la voiture et des panneaux centraux (figure 4). Cet ensemble est complété par des bielles obliques télescopiques telles que 30.

Comme le montrent plusieurs figures, la hauteur des panneaux centraux mobiles de recouvrement 20 et 21 est suffisamment importante pour masquer et protéger les roues porteuses 7 et 8 du module intermédiaire 4.

Selon une des caractéristiques générales de l'invention, chaque panneau central mobile de recouvrement 20 ou 21 est supporté à translation transversale par le cadre central 12 au moyen d'un dispositif de support et de guidage 31 pour son maintien au repos et pendant les mouvements transversaux en éloignement et en rapprochement par rapport au module intermédiaire 4.

A cet effet, divers types de dispositifs de support et de guidage 31 sont possibles. On décrira ci-après celui représenté sur les figures. Il s'agit d'un dispositif de support et de guidage du type parallélogramme déformable sous la forme de deux croisillons juxtaposés 32 et 33 et articulés entre eux à pivotement au centre par un axe de jumelage 34. Les extrémités supérieures des branches homologues sont montées articulées à pivotement d'une part sur la partie du cadre central 12 en regard et d'autre part sur la face interne du panneau central concerné. Les extrémités inférieures homologues du croisillon sont montées coulissantes verticalement dans et le long de guides appropriés 35 et 36 respectivement sur le cadre central 12 et sur la face arrière de chaque panneau central tel que 20 ou 21.

Tous les dispositifs de support assurent simultanément le maintien statique et dynamique du panneau central correspondant et le complément nécessaire de guidage lors des mouvements d'éloignement et de rapprochement du module intermédiaire 4.

En raison du caractère réversible du mouvement transversal des dispositifs de support et de guidage 31, chaque panneau est aussi mobile en déplacement inverse c'est-à-dire en rapprochement sous l'effet de moyens de rappel individuels propres à chaque panneau central ou communs ou de liaison de jumelage. Ces moyens de rappel sont actifs en permanence ou commandés. La force de rappel élastique est engendrée par des moyens individuels ou un moyen commun. Un exemple de réalisation est représenté sur les figures 4 et 7.

Il peut s'agir comme représenté d'une corde élastique 37 tendue entre un point situé dans la partie supérieure de chaque panneau central et un point fixe ou une corde élastique unique tendue entre les deux points hauts correspondants des panneaux centraux de recouvrement en regard les jumelant par une liaison élastique.

La façon de monter chaque panneau central de recouvrement déplaçable transversalement par rapport au module intermédiaire 4 et de permettre son guidage dans ce mouvement transversal peut s'effectuer par l'utilisation d'autres moyens.

Une des autres façons concerne l'utilisation de moyens conventionnels de support par exemple du type à glissière individuelles ou communes qui supportent chaque panneau ou les panneaux jusqu'en position écartée maximale puis s'effacent par rétraction ou autre.

Ces moyens de support extensibles sont connus et de ce fait non représentés. Ils sont associés à une force élastique de rappel ou à des moyens moteurs en translation, par exemple des moyens pousseurs-tireurs à vérins ou autres dispositifs moteurs asservis à la trajectoire.

Les extrémités de carrosserie des voitures adjacentes se déplaçant dans les virages, elles quittent le panneau central de recouvrement situé coté extérieur au virage en s'éloignant par échappement alors qu'elles se rapprochent l'une de l'autre et du panneau central de recouvrement situé du-côté intérieur au virage.

De manière à réaliser la continuité des plans de carrosserie des voitures, chacun des bords latéraux des extrémités de carrosserie vient se placer en juxtaposition le long du bord vertical correspondant d'un panneau central mobile lors du retour en configuration de ligne droite. Cet effet est rehaussé par le masquage de la partie supérieure des roues et par la continuation en partie inférieure du module intermédiaire du bord inférieur de la carrosserie des voitures adjacentes 2 et 3.

Les dispositifs de support et de guidage 31 se déploient sous l'effet des moyens automatiques de poussée occasionnant le déplacement de ses branches sur la face interne du panneau central mobile correspondant, pour réaliser ainsi son mouvement de projection transversale, c'est-à-dire sa poussée vers l'extérieur.

Les extrémités avant supérieures de la branche supérieure sont articulées à pivotement sur la face interne du panneau de recouvrement correspondant 20 ou 21 comme on peut le constater visuellement à l'observation de la figure 7.

Le dispositif de support et de guidage 31 représenté est passif. On peut bien entendu le prévoir actif en lui adjoignant un moyen moteur dont le rôle serait de réaliser aussi bien la poussée en écartement que la force de rappel. A cet effet, un vérin à simple ou à double effet disposé entre les branches conviendrait.

Dans ce dernier cas, une force s'exerce sur l'extrémité arrière déplaçable d'une branche pour provoquer le déploiement ou le retrait de ce dispositif de support et de guidage par pivotement des branches à l'encontre d'une force de rappel vers l'intérieur du module intermédiaire 4.

Dans le cas de la réalisation représentée, une force extérieure au dispositif de support et de guidage 31 agissant dans un ou dans les deux sens déplace le panneau central correspondant. Le dispositif de support ne procure alors qu'un guidage central assurant la stabilité du mouvement.

Bien entendu, un dispositif identique existe pour le panneau opposé et de ce fait la description de l'un d'entre eux suffit.

Une dernière caractéristique concerne la possibilité d'incliner chaque panneau central en vue de permettre l'accès aux roues pour l'entretien et le dépannage. Cette caractéristiques est illustrée par la figure 7. On remarque sur cette figure la possibilité de sortir les extrémités inférieures de l'une au moins des branches 32 ou 33 du dispositif 31 de leur guide inférieur par exemple 36 du côté de la face intérieure de chaque panneau central 20 ou 21. Ces extrémités étant libérées, il devient possible d'incliner le panneau en écartant sa partie inférieure du module intermédiaire. On le maintient dans cette position par une béquille de soutien représentée en oblique par des traits brisés.

Pour expliquer le fonctionnement, on se référera plus particulièrement aux figures schématiques 9 à 14.

En configuration de ligne droite (figure 8) chaque panneau central de recouvrement (20) ou (21) est aligné avec les extrémités des carrosseries des voitures adjacentes 2 et 3 protégeant ainsi le soufflet et les roues.

Lors d'un virage à droite ou à gauche (figures 9 et 11), le panneau central 20 ou 21 situé à l'extérieur du virage reste en place et se trouve par exemple rappelé vers l'intérieur du module par le moyen de rappel. Les bords d'extrémité des carrosseries des voitures adjacentes 2 et 3 en regard des bords du panneau central indiqué se dégagent en s'échappant de celui-ci.

Pour des raisons de cinématique et de symétrie, les axes des articulations 14 et 15 de pivotement des voitures adjacentes sont placés proches l'un de l'autre et proches du plan médian de l'essieu et les retours 22 et 23 des bords verticaux en regard sont convenablement inclinés de façon à éviter toute interférence.

Lors d'un virage à droite ou à gauche, (figure 9 et 11) le panneau central 20 ou 21 situé à l'intérieur du virage est poussé automatiquement vers l'extérieur du module intermédiaire 4 et donc vers l'intérieur du virage par le rapprochement des extrémités 18 et 19 des voitures 2 et 3 en raison de la fermeture en virage de l'angle que forment les voitures 2 et 3 entre elles. Cette poussée résulte du contact d'appui des bords verticaux des panneaux centraux 20 et 21 sur les pistes supérieures 24 et 25 formant rampes de poussée. Cette poussée assure le déplacement automatique du panneau central 20 ou 21 vers l'extérieur du module intermédiaire 4. Lors du retour en ligne droite, chaque panneau central 20 ou 21 est rappelé automatiquement vers l'intérieur du module intermédiaire par la force élastique des moyens de rappel par exemple par la corde élastique 37.

Dans les virages, lors des mouvements de roulis et/ou de tangage prononcés entre les voitures, la corne supérieure d'écartement 26 ou 27 réalise le travail nécessaire de poussée en écartement afin d'éviter toute interférence entre la zone supérieure d'extrémité du panneau central concerné 20 ou 21 et celle correspondante de la voiture adjacente. Ce phénomène se produit surtout en virage.

Ainsi, le véhicule peut absorber toutes les combinaisons de mouvements de roulis, de tangage et de lacet. Le contact est uniquement localisé en haut et d'une façon générale dans les endroits où l'on dispose du volume nécessaire.

## Revendications

1. Protection bilatérale pour un passage d'intercirculation (1) équipé d'un soufflet (9) de protection pour un module intermédiaire (4) autoporté assurant la liaison entre deux voitures successives (2) et (3) d'un même véhicule articulé de transport notamment de personnes **caractérisée en ce qu'**au droit du passage d'intercirculation (1) en prolongation de chacune des surfaces latérales de carrosserie de chaque voiture (2) ou (3) articulée chacune sur le module intermédiaire (4) par une articulation de pivotement (14), (15) et en recouvrement du soufflet de protection (9) du passage d'intercirculation (1) est monté mobile en mouvements transversaux d'éloignement et de rapprochement par rapport au module intermédiaire (4) un panneau central (20) ou (21) entre d'une part une position de ligne droite dans laquelle il se trouve en continuation coplanaire avec les extrémités de la carrosserie latérale de chacune des voitures (2) ou (3) aboutissant au module intermédiaire (4), et d'autre part une position intérieure au virage, vers et jusque dans laquelle le panneau central mobile (20) ou (21) s'est déplacé automatiquement et transversalement sous l'effet d'une force motrice automatique et de laquelle il est ramené automatiquement au retour en ligne droite par une force de rappel.

2. Protection bilatérale selon la revendication 1 **caractérisée en ce que** les articulations de pivotement (14) et (15) des voitures (2) et (3) sur le module intermédiaire (4) sont disposées proches l'une de l'autre.

3. Protection bilatérale selon la revendication précédente **caractérisée en ce que** les articulations de pivotement (14) et (15) sont proches de la ligne d'essieu reliant entre elles les deux roues du module intermédiaire (4).

4. Protection bilatérale selon la revendication 1, 2 ou 3 **caractérisée en ce que** le panneau central mobile de recouvrement (20) ou (21) situé du côté extérieur au virage reste immobile pendant les phases de prise de virage et de retour en ligne droite.

5. Protection bilatérale selon l'une quelconque des revendications précédentes **caractérisée en ce que** la force motrice automatique d'éloignement transversal est liée au mouvement des carrosseries adjacentes.

6. Protection bilatérale selon la revendication 1 **caractérisée en ce que** chaque panneau central mobile (20) ou (21) est rappelé vers le module intermédiaire (4) lorsqu'il est en position extérieure au virage.

7. Protection bilatérale selon la revendication 1 **caractérisée en ce que** chaque panneau central mobile (20) ou (21) est rappelé vers le module intermédiaire (4) lorsqu'il est en position intérieure au virage.

8. Protection bilatérale selon la revendication 1 ou 5 ou 6 ou 7 **caractérisée en ce que** la force de rappel est une force transversale élastique en rapprochement vers le module intermédiaire (4).

9. Protection bilatérale selon la revendication 1 **caractérisée en ce que** le module intermédiaire (4) comporte un cadre central vertical (12) supporté par le châssis du module intermédiaire (4) à travers des suspensions.

10. Protection bilatérale selon la revendication précédente **caractérisée en ce que** chaque panneau central de recouvrement (20) ou (21) est monté mobile en déplacement d'éloignement et de rapprochement par rapport au module intermédiaire (4) par un dispositif de support et de guidage (31) sur le cadre central vertical (12).

11. Protection bilatérale selon la revendication précédente **caractérisée en ce que** le dispositif de support et de guidage (31) de chaque panneau de recouvrement (20) ou (21) est un dispositif à deux croisillons pivotants (32) ou (33) dont les extrémités supérieures des branches homologues sont montées articulées à pivotement d'une part sur la partie du cadre central (12) en regard et d'autre part sur la face arrière du panneau central de recouvrement concerné, les extrémités inférieures homologues du croisillon sont montées coulissantes verticalement dans et le long de guides appropriés (35) et (36) respectivement sur le cadre central (12) et sur la face arrière de chaque panneau central de recouvrement (20) ou (21) pour supporter et guider ce panneau central mobile de recouvrement transversalement pendant son mouvement de déplacement latéral par rapport au module intermédiaire (4).

12. Protection bilatérale selon la revendication précédente **caractérisée en ce que** les extrémités inférieures des branches du dispositif de support et de guidage (31) sortent de leur guide (36) du côté de la face inférieure de chaque panneau central de recouvrement (20) ou (21) pour permettre de l'incliner en vue d'accéder à l'espace situé en dessous des roues.

13. Protection bilatérale selon la revendication 1 **caractérisée en ce que** la force motrice automatique vers l'intérieur du virage est une force de poussée.

14. Protection bilatérale selon la revendication précédente **caractérisée en ce que** la force automatique de poussée en virage vers l'extérieur du module intermédiaire (4) provient du contact de l'extrémité correspondante de la carrosserie latérale de chaque voiture contre les bords longitudinaux verticaux du panneau central mobile de recouvrement (20) ou (21).

15. Protection bilatérale selon la revendication 14 **caractérisée en ce que** les parties supérieures des extrémités des carrosseries latérales de chaque voitures présentent des renforts longitudinaux formant piste de glissement (24) et (25) pour les bords longitudinaux verticaux de chaque panneau central mobile de recouvrement (20) ou (21).

16. Protection bilatérale selon la revendication 1 **caractérisée en ce que** chaque panneau central de recouvrement (20) ou (21) se prolonge vers le bas pour couvrir presque totalement les roues du module intermédiaire (4).

17. Protection latérale - selon la revendication précédente **caractérisée en ce que** chacune des parties supérieures des extrémités des surfaces latérales des carrosseries de flanc d'au moins une voitures (2) ou (3)est équipée d'une corne d'écartement (26) ou (27) dégageant la partie supérieure du panneau mobile central (20) ou (21) adjacent de manière à éviter toute interférence de l'extrémité voisine de carrosserie avec celui-ci lors des mouvements de roulis ou de tangage.

18. Protection bilatérale selon la revendication précédente **caractérisée en ce que** la corne d'écartement (26) ou (27) que présente l'extrémité supérieure d'au moins une des voitures (2) ou (3) est réalisée sous la forme d'une tige décalée latéralement vers l'intérieur du module intermédiaire (4) de façon à éviter les interférences entre les bords en regard du panneau de recouvrement (20) ou (21) et ceux de la voiture adjacente lors des mouvements de roulis ou de tangage.

19. Protection bilatérale selon la revendication 1 **caractérisée en ce que** les panneaux de recouvrement (20) ou (21) sont jumelés en commande.

20. Protection bilatérale selon la revendication 1 **caractérisée en ce que** le cadre central (12) est articulé à la voiture avant par deux bielles obliques supérieures (28) et (29) qui concourent à assurer un mouvement d'ensemble aux structures voisines que sont les extrémités respectivement de la voiture avant et des panneaux centraux de recouvrement (20) ou (21), le tout étant complété par des bielles obliques télescopiques telles que (30).

## Claims

1. A bilateral protection for a connecting passageway (1) equipped with a protective bellows (9) for a self-supporting intermediate module (4) forming the connection between two successive cars (2) and (3) of a single articulated transport vehicle, specifically a passenger vehicle, **characterized in that** at right angle with the connecting passageway (1) and extending from each of the lateral body surfaces of each car (2) or (3) each of which is articulated to the intermediate module (4) by a pivot articulation (14), (15) and covering the protective bellows (9) on the connecting passageway (1) there is a central panel (20) or (21) that is transversely movable toward and away from the intermediate module (4), between a first straight line position in which it is coplanar and continuous with the extremities of the lateral body of each of the cars (2) or (3) terminating at the intermediate module (4), and a second interior turn position, towards which and into which the movable central panel (20) or (21) is automatically and transversely displaced by an automatic drive force and from which it is automatically retracted and returned to a straight line by a recall force.

2. A bilateral protection according to claim 1 **characterized in that** the pivot articulations (14) and (15) of the cars (2) and (3) on the intermediate module (4) are located near one another.

3. A bilateral protection according to the preceding claim **characterized in that** the pivot articulations (14) and (15) are close to the line of the axle connecting the two wheels of the intermediate module (4).

4. A bilateral protection according to claim 1, 2, or 3 **characterized in that** the movable central covering panel (20) or (21) located on the outside of the turn remains immobile during the phases of turning and returning to a straight line position.

5. A bilateral protection according to anyone of the preceding claims **characterized in that** the automatic transverse pushing force is associated with the movement of the adjacent bodies.

6. A bilateral protection according to claim 1 **characterized in that** each movable central panel (20) or (21) is recalled to the intermediate module (4) when positioned on the outside of the turn.

7. A bilateral protection according to claim 1 **characterized in that** each movable central panel (20) or (21) is moved towards the intermediate module (4) when it is positioned inside the turn.

8. A bilateral protection according to claim 1 or 5 or 6 or 7 **characterized in that** the recall force is an elastic transverse force pushing towards the intermediate module (4).

9. A bilateral protection according to claim 1 **characterized in that** the intermediate module (4) comprises a vertical central frame (12) supported by the chassis of the intermediate module (4) through suspensions.

10. A bilateral protection according to the preceding claim **characterized in that** each central covering panel (20) or (21) is attached so as to be displaceable toward and away from the intermediate module (4) by means of a support and guide device (31) on the vertical central frame (12).

11. A bilateral protection according to the preceding claim **characterized in that** the support and guide device (31) for each central covering panel (20) or (21) is a device with two pivoting cross bars (32) or (33), with the upper extremities of like branches being pivotably attached first, to the opposite portion of the central frame (12) and second, to the rear surface of the central covering panel concerned, and like lower extremities of the cross bar slide vertically inside and along the appropriate respective guides (35) and (36) on the central frame (12) and on the rear surface of each central covering panel (20) or (21) to support and guide this movable central covering panel transversely during its lateral displacement relative to intermediate module (4).

12. A bilateral protection according to the preceding claim **characterized in that** the lower extremities of the branches of the support and guide device (31) are removed from their guide (36) on the lower surface side of each central covering panel (20) or (21), allowing it to be angled for access to the space below the wheels.

13. A bilateral protection according to claim 1 **characterized in that** the automatic force exerted toward the interior of the turn is a pushing force.

14. A bilateral protection according to the preceding claim **characterized in that** the automatic pushing force exerted during turns towards the outside of the intermediate module (4) is generated from the contact by the corresponding extremity of the lateral body of each car with the vertical longitudinal edges of the movable central covering panel (20) or (21).

15. A bilateral protection according to claim 14 **characterized in that** the upper portions of the extremities of the lateral bodies of each of the cars have longitudinal reinforcements forming a slide or track (24) and (25) for the vertical longitudinal edges of each movable central covering panel (20) or (21).

16. A bilateral protection according to claim 1 **characterized in that** each central covering panel (20) or (21) extends downward, almost completely covering the wheels of the intermediate module (4).

17. A bilateral protection according to the preceding claim **characterized in that** each of the upper portions of the extremities of the lateral surfaces of the side bodies of at least one of the cars (2) or (3) is equipped with a separating handle (26) or (27) disengaging the upper portion of the adjacent movable central panel (20) or (21) 50 as to eliminate interference between the nearby body extremity and the panel during lurching or pitching motion.

18. A bilateral protection according to the preceding claim **characterized in that** the separating handle (26) or (27) which equips the upper extremity of at least one of the cars (2) or (3) takes the form of a rod laterally offset toward the inside of the intermediate module (4) in order to eliminate interference between the opposing edges of the covering panel (20) and (21) and those of the adjacent car during lurching or pitching motion.

19. A bilateral protection according to claim 1 **characterized in that** the covering panels (20) and (21) are controlled as a pair.

20. A bilateral protection according to claim 1 **characterized in that** the central frame (12) is articulated to the front car by two upper oblique rods (28) and (29) which cooperate to ensure that the nearby structures, which consist of the respective extremities of the front car and the central covering panels (20) or (21), move together, with the unit being completed by telescoping oblique rods such as rod (30).

## Patentansprüche

1. Zweiseitiger Schutz für einen mit einem Schutzbalg (9) ausgestatteten Durchgang (1) für eine selbsttragende Zwischenbaügruppe (4), welche die Verbindung zwischen zwei aufeinanderfolgenden Wagen (2, 3) eines gelenkigen Transportfahrzeugs, insbesondere zur Personenbeförderung, gewährleistet, **dadurch gekennzeichnet, dass** gegenüber des Durchgangs (1) in Verlängerung jeder der Seitenflächen der Karosserie jedes der jeweils mittels eines Schwenkgelenks (14, 15) auf der Zwischenbaugruppe (4) verschwenkbaren Wagen (2, 3) und zum Verkleiden des Schutzbalgs (9) des Durchgangs (1) eine zentrale Blende (20, 21) beweglich angeordnet ist für seitliche Entfernungs- und Annäherungsbewegungen bezüglich der Zwischenbaugruppe (4) zwischen einerseits einer ausgerichteten Stellung, in der sie sich in koplanarer Fortsetzung der Enden der seitlichen Karosserie eines jeden Wagens (2, 3) befindet, der an die Zwischenbaugruppe (4) angrenzt, und andererseits einer in Kurven innenliegenden Stellung, wobei die bewegliche zentrale Blende (20, 21) bei Annäherung an diese und in dieser Stellung automatisch und quer unter dem Einfluss einer automatischen Antriebskraft verschiebbar und aus dieser Stellung durch eine Rückstellkraft automatisch in die ausgerichtete Stellung zurück bewegbar ist.

2. Zweiseitiger Schutz nach Anspruch 1, **dadurch gekennzeichnet, dass** die Schwenkgelenke (14, 15) der Wagen (2, 3) an der Zwischenbaugruppe (4) benachbart angeordnet sind.

3. Zweiseitiger.Schutz nach dem vorangehenden Anspruch, **dadurch gekennzeichnet, dass** die Schwenkgelenke (14, 15) nahe der Achslinie angeordnet sind, die die beiden Räder der Zwischenbaugruppe (4) verbindet.

4. Zweiseitiger Schutz nach einem der Ansprüche 1 bis 3, **dadurch gekennzeichnet, dass** die bewegliche zentrale Verkleidungs-Blende (20, 21) auf der Kurvenaußenseite während einer Einfahrt in die Kurve und bei Rückkehr in einen ausgerichteten Zustand unbeweglich ist.

5. Zweiseitiger Schutz nach einem der vorangehenden Ansprüche, **dadurch gekennzeichnet, dass** die automatische Antriebskraft zum Querentfernen mit der Bewegung der benachbarten Karosserien verknüpft ist.

6. Zweiseitiger Schutz nach Anspruch 1, **dadurch gekennzeichnet, dass** jede zentrale bewegliche Blende (20, 21). in Richtung der Zwischenbaugruppe (4) rückgetrieben wird, wenn sie sich auf der Kurvenaußenseite befindet.

7. Zweiseitiger Schutz nach Anspruch 1, **dadurch gekennzeichnet, dass** jede zentrale bewegliche Blende (20, 21) in Richtung der Zwischenbaugruppe (4) rückgetrieben wird, wenn sie sich auf der Kurveninnenseite befindet.

8. Zweiseitiger Schutz nach einem der Ansprüche 1, 5, 6 oder 7, **dadurch gekennzeichnet, dass** die Rückstellkraft eine elastische Querkraft der Annäherung an die Zwischenbaugruppe (4) ist.

9. Zweiseitiger Schutz nach Anspruch 1, **dadurch gekennzeichnet, dass** die Zwischenbaugruppe (4) einen zentralen vertikalen Rahmen (12) aufweist, der durch das Chassis der Zwischenbaugruppe (4) über Aufhängungen getragen ist.

10. Zweiseitiger Schutz nach dem vorangehenden Anspruch, **dadurch gekennzeichnet, dass** jede zentrale Verkleidungs-Blende (20, 21) beweglich für Annäherungs- und Entfernungsverschiebung bezüglich der Zwischenbaugruppe (4) mittels einer Halte- und Führungseinrichtung (31) am zentralen vertikalen Rahmen (12) befestigt ist.

11. Zweiseitiger Schutz nach dem vorangehenden Anspruch, **dadurch gekennzeichnet, dass** die Halte- und Führungseinrichtung (31) jeder Verkleidungs-Blende (20, 21) eine Einrichtung mit zwei Schwenkarmkreuzen (32, 33) ist, deren obere Enden entsprechender Arme schwenkbar einerseits am gegenüberliegenden Bereich des zentralen Rahmens (12) und andererseits an der Rückseite der entsprechenden zentralen Verkleidungs-Blende angelenkt sind, wobei die unteren einander entsprechenden Enden des Armkreuzes vertikal gleitend in und längs geeigneter Führungen am zentralen Rahmen (12) bzw. auf der Rückseite jeder zentralen Verkleidungs-Blende (20, 21) angeordnet sind, um die zentrale bewegliche Verkleidungs-Blende während ihrer seitlichen Verschiebebewegung bezüglich der Zwischenbaugruppe (4) in Querrichtung zu halten und zu führen.

12. Zweiseitiger Schutz nach dem vorangehenden Anspruch,
**dadurch gekennzeichnet, dass** die unteren Enden der Arme der Halte- und Führungseinrichtung (31) im Bereich der unteren Fläche jeder zentralen Verkleidungs-Blende (20, 21) aus ihrer Führung (36) austreten, um ein Kippen der Blende mit Blick auf einen Zugang zu dem Raum unterhalb der Räder zu ermöglichen.

13. Zweiseitiger Schutz nach Anspruch 1, **dadurch gekennzeichnet, dass** die automatische Antriebskraft in Richtung der Kurveninnenseite eine Druckkraft ist.

14. Zweiseitiger Schutz nach dem vorangehenden Anspruch, **dadurch gekennzeichnet, dass** die in Kurven auftretende automatische Druckkraft in Richtung der Außenseite der Zwischenbaugruppe (4) aufgrund des Kontakts des entsprechenden Endes der seitlichen Karosserie jedes Wagens mit den vertikalen Längsrändern der zentralen beweglichen Verkleidungs-Blende (20, 21) entsteht.

15. Zweiseitiger Schutz nach Anspruch 14, **dadurch gekennzeichnet, dass** die oberen Bereiche der Enden der seitlichen Karosserien jedes Wagens Längsverstärkungen aufweisen, die eine Gleitbahn (24, 25) für die vertikalen Längsränder jeder zentralen beweglichen Verkleidungs-Blende (20, 21) bilden.

16. Zweiseitiger Schutz nach Anspruch 1, **dadurch gekennzeichnet, dass** jede zentrale Verkleidungs-Blende (20, 21) sich nach unten erstreckt, um die Räder der Zwischenbaugruppe (4) fast vollständig zu überdecken.

17. Zweiseitiger Schutz nach dem vorangehenden Anspruch, **dadurch gekennzeichnet, dass** jeder der oberen Bereiche der Enden der seitlichen Flächen der Seitenkarosserie wenigstens eines Wagens (2, 3) ein Abstandshorn (26, 27) aufweist, das einen Freiraum für den oberen Bereich der benachbarten beweglichen zentralen Blende (20, 21) schafft, so dass jede Behinderung zwischen dem benachbarten Ende der Karosserie und der Blende bei Kippoder Nickbewegungen ausgeschlossen ist.

18. Zweiseitiger Schutz nach dem vorangehenden Anspruch, **dadurch gekennzeichnet, dass** das Abstandshorn (26, 27) am oberen Ende wenigstens eines Wagens (2, 3) in Form einer Stange ausgebildet ist, die seitlich in Richtung des Innenraui_{T}i_{S} der Zwischenbaugruppe (4) versetzt ist, um so die Behinderungen zwischen den gegenüberliegenden Rändern der Verkleidungs-Blende (20, 21) und dem benachbarten Wagen bei Kipp- oder Nickbewegungen zu verhindern.

19. Zweiseitiger Schutz nach Anspruch 1, **dadurch gekennzeichnet, dass** die Verkleidungs-Blenden (20, 21) steuerungstechnisch gepaart sind.

20. Zweiseitiger Schutz nach Anspruch 1, **dadurch gekennzeichnet, dass** der zentrale Rahmen (12) durch zwei obere Schräglenker (28, 29), die zum Gewährleisten der Gesamtbewegung der benachbarten Strukturen, d.h. der entsprechenden Enden des vorderen Wagens und der zentralen Verkleidungs-Blenden (20, 21) zusammenwirken, am vorderen Wagen angelenkt ist, wobei die Anordnung durch zwei teleskopische Schräglenker (30) kompletiert ist.
